# EUROPEAN PATENT APPLICATION

(11) **EP 4 481 931 A1**
(43) Date of publication of application: **25.12.2024**
(21) Application number: 23872952.9
(22) Date of filing: 21.09.2023
(51) Int. Cl.: H01M 50/503, H01M 50/517, H01M 50/204

(54) **BUSBAR ASSEMBLY INCLUDING BUSBAR BODY COMPRISING WIRE ASSEMBLY**

(30) Priority: 26.09.2022 KR 20220121727
(71) Applicant: LG Energy Solution, Ltd., Seoul 07335 (KR)
(72) Inventor: HWANG, Sung Tack, Daejeon 34122 (KR)
(74) Representative: Hoffmann Eitle
(86) International application number: PCT/KR2023/014397
(87) International publication number: WO 2024/071835

(57) **Abstract**

The present invention relates to a busbar assembly including a busbar body including a wire assembly constituted by a plurality of wires and a coupling unit coupled to the wires at each of opposite ends of the busbar body, wherein the busbar body is flexible so as to be freely deformable, and a cooling function is improved.

## Description

### [Technical Field]

This application claims the benefit of priority to Korean Patent Application No. 2022-0121727 filed on September 26, 2022, the disclosure of which is incorporated herein by reference in its entirety.

The present invention relates to a busbar assembly including a busbar body constituted by a wire assembly. More particularly, the present invention relates to a busbar assembly including a busbar body constituted by a wire assembly having an improved cooling function to prevent damage to a battery module or electrical parts due to a heat generation phenomenon.

### [Background Art]

A plurality of lithium secondary batteries is assembled with a battery disconnect unit (BDU) assembly and a battery management system (BMS) to constitute a battery module or a battery pack. A connection member, such as a relay or a busbar, may be used for electrical connection between these individual parts.

The lithium secondary battery generates heat during charging and discharging thereof. When the connection member, such as the busbar, is heated by the generated heat, the resistance of a conductive agent may increase, whereby electrical conduction performance may be lowered. A vicious cycle in which temperature increases due to increase in resistance of the conductive agent and the resistance of another part increases may occur, and the connection member may not be operated in the worst case.

Another problem to be solved is that a busbar, which is used as an electrical connection means, is used as a heat transfer path. Ambient heat may be transferred to a power distribution device via the busbar. As a result, electrical conduction performance of an electric part in the power distribution device, such as a relay, may be reduced, whereby the overall performance of the battery pack may be reduced.

In order to solve the problem that heat is generated by the battery module or the battery pack, a method of applying a cooling system using refrigerant to the power distribution device or cooling each individual part such as a relay has been considered. Predictive technology to simulate change in temperature of the battery pack has also been developed.

Nevertheless, cooling of the busbar itself is still not considered. Only a passive method of introducing a busbar having a larger capacity than current required by the battery pack, i.e., a busbar having a larger area, has been applied instead of cooling an individual part, such as a busbar.

Such change in structure of the busbar increases manufacturing costs and requires a wider space. This requires an increase in size of an electric part, which is incompatible with the current need to increase capacity per volume or reduce the size of the battery pack.

Patent Document 1 relates to a flexible busbar for vehicles, wherein the flexible busbar is configured to have a structure in which a connection terminal is coupled to each of opposite ends of a flexible and stretchable braided wire, three braided wires are stacked in a thickness direction of the connection terminal, and the outer periphery of all of the three braided wires is covered with a heat-shrinkable tube.

The flexible busbar of Patent Document 1 is configured to have a structure in which the braided wires have different lengths such that, when pressurization is performed from a shorter braided wire to a longer braided wire, excessive tension is not applied to the longer braided wire. Since all of the braided wires are located in one heat-shrinkable tube, however, it is difficult to quickly discharge heat when the temperature of the braided wires increases.

Patent document 2 relates to an electrical battery connector for an accumulator or a battery for the automotive industry or an electrical high-current connector for an electric module connector, wherein the connector has a stranded wire and a solid electrical connection piece, and an end of the stranded wire is configured to be embedded in a part of the solid electrical connection piece.

The stranded wire of Patent document 2 is formed as a flat strand (braided wire), a round strand (braided cable or stranded wire), or a braided sleeving, and it is disclosed that the stranded wire may be made of a copper material or an aluminum material.

However, Patent document 2 does not suggest technology for improving heat generation and cooling functions when the high-current connector is used.

Consequently, there is a need for technology capable of improving heat dissipation without increasing the area of a busbar assembly and without including a separate cooling member and preventing reduction of electrical conduction performance due to a surrounding heat source.

### (Prior Art Documents)

(Patent Document 1) Japanese Patent Application Publication No. 2008-041330 (2008.02.21)
(Patent Document 1) Korean Patent Application Publication No. 2018-0135809 (2018.12.21)

### [Disclosure]

### [Technical Problem]

The present invention has been made in view of the above problems, and it is an object of the present invention to provide a busbar assembly configured such that heat dissipation is improved by increasing the surface area of a busbar body and heat generated from a surrounding heat source is prevented from being transferred through the busbar body, whereby damage to an electric part is prevented.

### [Technical Solution]

A busbar assembly according to the present invention to accomplish the above object includes a busbar body including a wire assembly constituted by a plurality of wires and a coupling unit coupled to the wires at each of opposite ends of the busbar body.

Each of the wires may include a linear conducting member covered with an insulative tube.

At least one gap may be defined between the wires.

The coupling unit may have a plurality of holes configured to receive insertion of the wires thereinto, and at least one of the wires may be inserted into and coupled to each of the holes. The coupling unit may be configured to have a polygonal or circular shape having a uniform thickness, and a plurality of holes, to which the wires are coupled, may be provided in a side surface of the coupling unit.

The wires may be coupled to the coupling unit by at least one of a simple fitting, a conductive adhesive, or dissolution of a filler material.

A coupling means simultaneously performing electrical contact and physical fixing may be added to the coupling unit.

The coupling unit may include a through-hole for fastening of a coupling member.

The coupling member may be at least one of a bolt and nut, a bolt, a pin, or a rivet.

A first end of the busbar body may be coupled to one first coupling unit, and a second end of the busbar body may be coupled to one second coupling unit. The wires constituting the busbar body may each have a same length.

The busbar body may be constituted by at least two small-unit wire assemblies, a first end of the busbar body may be coupled to one first coupling unit, and a second end of the busbar body may be coupled to a third coupling unit for each small-unit wire assembly. The small-unit wire assemblies may have different lengths from one another.

A method of manufacturing the busbar assembly includes the steps of preparing a coupling unit having a plurality of holes formed therein, inserting wires constituting a busbar body into the holes, and coupling the wires to the coupling unit.

The wires may be coupled to the coupling unit by dissolution of a filler material.

The present invention provides a battery module including the busbar assembly.

In addition, the present invention may provide various combinations of the above solving means.

### [Advantageous Effects]

As is apparent from the above description, in a busbar assembly according to the present invention, a busbar body is constituted by a plurality of wires, whereby the surface area of the busbar body is increased, and therefore heat dissipation is improved.

In addition, the plurality of wires constituting the busbar body is disposed so as not to be in tight contact with each other, whereby convection of air can occur in a space formed between the wires, and therefore the cooling effect may be improved.

In addition, wire assemblies have different lengths or a plurality of small-unit wire assemblies is provided, whereby the degree of freedom in connection distance and positioning is high, and connection between one part and many parts is achieved.

### [Description of Drawings]

FIG. 1 is a perspective view of a first embodiment of a busbar assembly according to the present invention.
FIG. 2 is a partial enlarged view of FIG. 1.
FIG. 3 is a perspective view of a coupling unit of the first embodiment of the busbar assembly according to the present invention.
FIG. 4 is a perspective view of a second embodiment and a third embodiment of the busbar assembly according to the present invention.
FIG. 5 is a partial plan view of a busbar assembly, showing a busbar assembly manufacturing process according to the present invention in order.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the accompanying drawings.

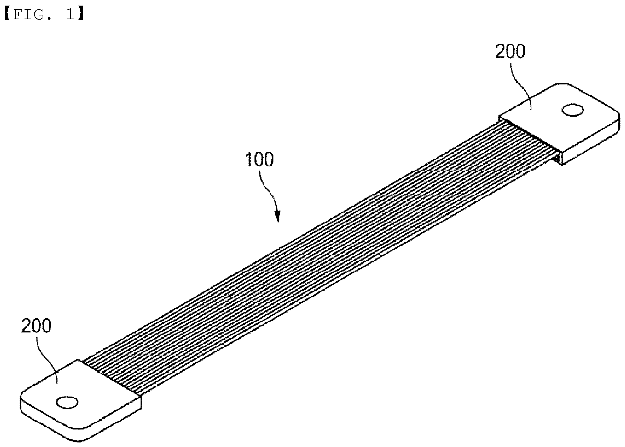

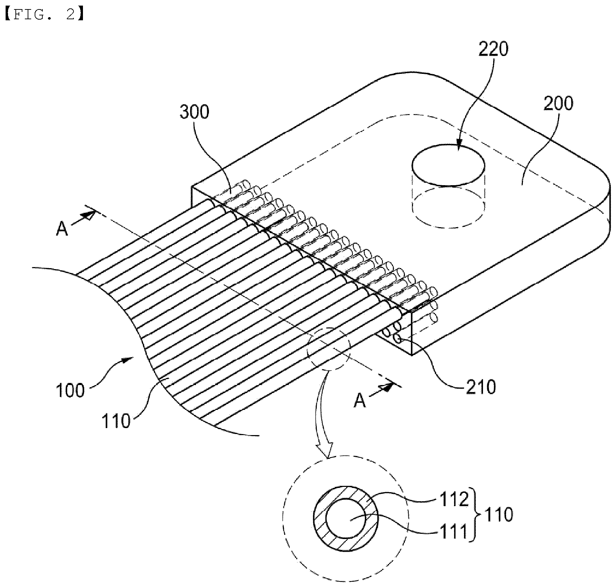

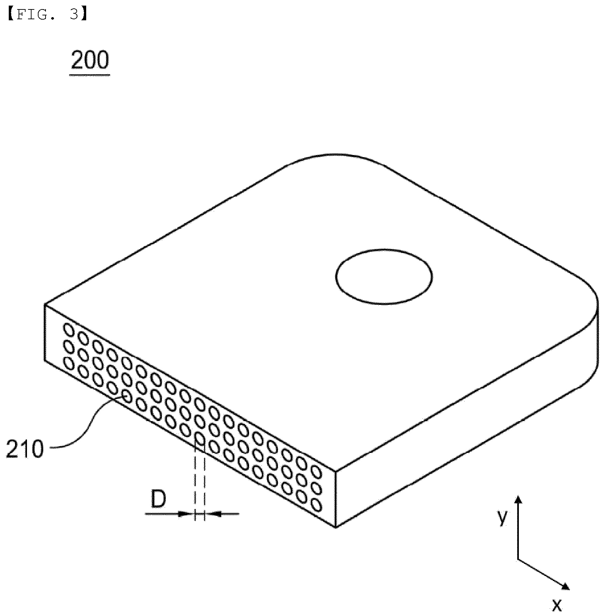

FIG. 1 is a perspective view of a first embodiment of a busbar assembly according to the present invention, FIG. 2 is a partial enlarged view of FIG. 1, and FIG. 3 is a perspective view of a coupling unit of the first embodiment of the busbar assembly according to the present invention.

Referring to FIGs. 1 to 3, the busbar assembly according to the present invention includes a busbar body 100 configured in the form of a wire assembly constituted by a plurality of wires 110 and a coupling unit 200 coupled to the wires 110 at each of opposite ends of the busbar body 100.

Since the busbar body is constituted by a plurality of wires, the present invention has an effect in that the surface area of the busbar body is increased, whereby heat dissipation is improved, when compared to using a conventional rod-shaped metal plate. When compared to the case in which heat generated from an external heat source is transmitted through the metal plate, the heat transfer effect may be reduced as the result of using a wire assembly having better heat dissipation than the metal plate, and therefore it is possible to prevent reduction of electrical conduction performance due to an increase in temperature.

In addition, since the wires are coupled to the coupling unit in a state of being disposed so as to be spaced apart from each other by a predetermined distance, a space in which cooling by convection of air can occur is formed between the wires. Consequently, the busbar assembly according to the present invention may achieve a cooling effect due to the structural advantages of the busbar assembly without a separate cooling member.

The wires 110 constituting the busbar body 100 each have a same length, and a first end of the busbar body 100 is coupled to one first coupling unit 200 while a second end of the busbar body 100 is coupled to one second coupling unit 200.

Each of the wires 110 may be configured to be circular, elliptical, or polygonal in section, and the wires may be configured to have the same shapes and same sizes. The wires 110 are disposed in the same plane in a width direction of the coupling unit in a state of not being in tight contact with each other and being spaced apart from each other. Although not shown in the figures, some of the wires 110 may be in tight contact with each other, but only partially, and as a whole, a gap is provided between the respective wires.

The coupling unit 200 is provided with a plurality of holes 210, into which the wires 110 are inserted, and at least one wire may be inserted into and coupled to each hole 210. In FIGs. 1 to 3, one wire 110 is shown as being inserted into each hole 210.

The coupling unit 200 may be configured to have a polygonal or circular shape having a uniform thickness, and a plurality of holes 210, to which the wires 110 are coupled, is provided in a side surface of the coupling unit. The coupling unit 200 is made of a conductive material, preferably metal.

The coupling unit 200 is provided with a plurality of holes 210, into which the wires 110 are inserted, wherein the holes 210 may be formed in two or more rows at regular intervals in a thickness direction y and a width direction x of the coupling unit 200. Consequently, the wires 110 may be coupled to the coupling unit 200 in two or more rows in the thickness direction y thereof.

When considering that heat dissipation is improved as the surface area of the wire increases, thinner wires may be more effective at dissipating heat.

Each of the wires may be configured to have a structure in which a linear conducting member 111 is provided inside and the conducting member 111 is covered with an insulative tube 112. Alternatively, the conducting member 111 may be coated with an insulating material. For example, for heat dissipation performance, a covering material including a ceramic, which is an insulating material that exhibits high heat dissipation performance, may be used. However, the end of the wire, i.e., the part of the wire that is inserted into the coupling unit, may be configured not to be covered with the insulative tube and to be exposed such that electrical conduction between the busbar body 100 and the coupling unit 200 is achieved.

Although not shown in the figures, the wire may be constituted by only an uncovered linear conducting member, since the busbar is not generally exposed to the outside. In this case, the surface area of each wire may be reduced. Depending on the type of a covering material, heat dissipation may increase or decrease.

One wire 110 may be individually inserted into each hole 210 in the coupling unit 200 so as to be coupled to the coupling unit 200, and/or a plurality of wires 110 may be inserted into one hole 210 so as to be coupled to the coupling unit 200.

In order that the wires can be easily spaced apart from each other, it is preferable for one wire 110 to be inserted into and coupled to each hole 210 of the coupling unit 200.

At this time, at least one of simple fitting, addition of a conductive adhesive, and dissolution of a filler material may be used as a method of coupling the wires 110 to the holes 210 of the coupling unit 200.

For example, when the wires are coupled to the holes of the coupling unit using a filler material dissolution method, the filler material may be added to the end of each wire, the wires each having the filler material added thereto may be inserted into the holes of the coupling unit, and brazing may be performed. Alternatively, the filler material may be added to the inside of each of the holes of the coupling unit, the wires may be inserted into the holes, and brazing may be performed.

The size of the coupling unit 200 and the number of holes formed in the coupling unit and the size D of each hole may vary depending on the current specifications of an electrical member to which the busbar assembly is coupled, the number of wires required, and the thickness of each wire, and the wires may be coupled to only some of the holes of the coupling unit.

Meanwhile, in order for the wires 110 to remain spaced apart from each other as a whole, a middle fixing portion, which has a small thickness and is provided in a side surface thereof with holes disposed in the same manner as the holes 210 of FIG. 3, may be further added to a middle part of the busbar body. The wires 110 coupled to the holes 210 of the coupling unit 200 may extend through the holes of the middle fixing portion in the same manner.

A coupling means configured to simultaneously perform electrical contact and physical fixing may be added to the coupling unit 200. For example, the coupling unit 200 may be provided with a through-hole 220 for fastening of a coupling member, which is formed through the coupling unit in the thickness direction thereof, and a part to be coupled to the coupling unit 200 may be disposed at one side of the coupling unit. At this time, the part and the coupling unit may be disposed such that the through-holes for fastening of the coupling member are aligned with each other, and at least one of a bolt, a pin, and a rivet may be inserted through the through-holes 220 and then fixed using a nut or a fixing member or riveting may be performed such that the coupling unit and the part are coupled to each other.

Alternatively, when the coupling unit 200 has no through-hole, a conductive adhesive may be added to a coupling surface of the coupling unit, a hook or a latch may be provided at the coupling unit so as to be fastened to another part, or the entirety of the coupling unit may be inserted into and mounted to a recess formed in another part.

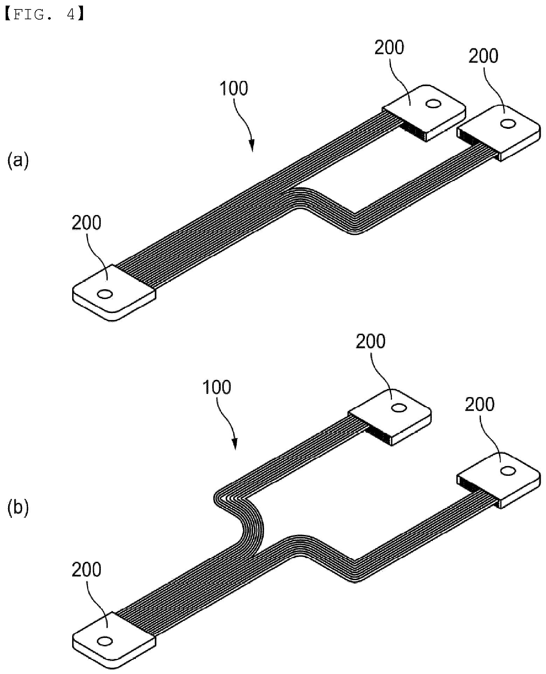

FIG. 4 is a perspective view of a second embodiment and a third embodiment of the busbar assembly according to the present invention.

Referring to FIG. 4, (a) of FIG. 4 shows a busbar assembly according to a second embodiment, and (b) of FIG. 4 shows a busbar assembly according to a third embodiment.

In the busbar assembly according to the second embodiment and the busbar assembly according to the third embodiment, the busbar body 100 is constituted by two small-unit wire assemblies. A first end of the busbar body 100 is coupled to one first coupling unit 200, and a second end of the busbar body 100 is coupled to a third coupling unit 200 for each small-unit wire assembly.

For each small-unit wire assembly, the wires may be coupled with the second coupling unit 200 and the third coupling unit so as to be spaced apart from each other in the same plane, wherein the small-unit wire assemblies coupled to the first coupling unit may be disposed in the same plane or the small-unit wire assemblies may be disposed in different planes.

The size of the third coupling unit may be less than the size of the first coupling unit, or the same unit as the first coupling unit may be used as the third coupling unit.

When the busbar body is constituted by small-unit wire assemblies, as described above, one part may be electrically connected to a plurality of parts, whereby it is possible to reduce the number of busbar assemblies. The number of connectors of an electrical part, to which the busbar assemblies are coupled, may be reduced in proportion to the reduced number of busbar assemblies, whereby the area required for electrical connection may be used for other functions and an electrical connection circuit may be variously configured.

In the busbar assembly according to the second embodiment, the small-unit wire assemblies have different lengths. Consequently, even when the distance between a 3-1 electrical part to which the third coupling unit is coupled and a first electrical part to which the first coupling unit is coupled is different from the distance between a 3-2 electrical part to which the third coupling unit is coupled and the first electrical part to which the first coupling unit is coupled, electrical connection therebetween may be achieved using a single busbar assembly.

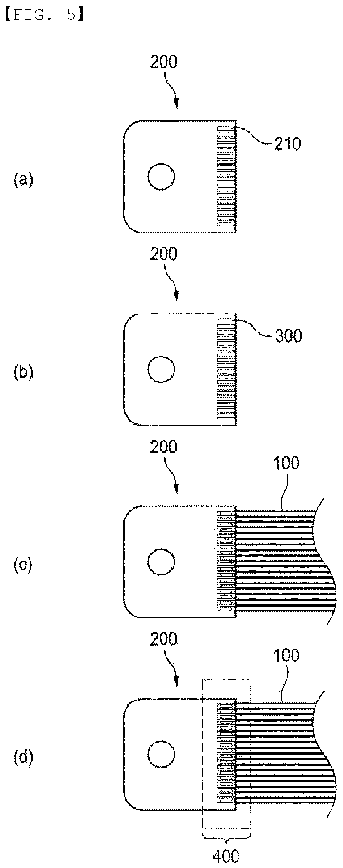

FIG. 5 is a partial plan view of a busbar assembly, showing a busbar assembly manufacturing process according to the present invention in order.

Referring to FIG. 5, the busbar assembly manufacturing process includes steps of preparing a coupling unit 200 having a plurality of holes 210 formed therein ((a) of FIG. 5), inserting wires constituting a busbar body 100 into the holes 210 ((c) of FIG. 5), and coupling the wires to the coupling unit 200 ((d) of FIG. 5).

Specifically, dissolution of a filler material 300 may be used as a method of coupling the wires to the coupling unit, and the busbar assembly manufacturing process may include a step of adding the filler material 300 to the holes 210 of the coupling unit 200, as shown in (b) of FIG. 5, before inserting the wires constituting the busbar body 100 into the coupling unit 200. Alternatively, the busbar assembly manufacturing process may include a step of adding the filler material to the ends of the wires to be inserted into the holes 210 of the coupling unit 200.

After inserting the busbar body 100 into the holes 210 of the coupling unit 200, as shown in (c) of FIG. 5, the busbar body 100 may be coupled to the coupling unit 200 by brazing, in which a peripheral portion 400 of the holes 210 of the coupling unit is heated, as shown in (d) of FIG. 5.

For example, silver (Ag) may be used as the filler material, and the temperature to which the peripheral portion 400 is heated may be set to a temperature range that is higher than the temperature at which silver melts and lower than the temperature at which the wires and the coupling unit melt.

A battery module configured such that electrical connection between electrical parts in the battery module using the busbar assembly manufactured using the above method may be manufactured, or electrical connection between the battery module and a peripheral part outside the battery module may be achieved using the busbar assembly.

The present invention provides a busbar assembly that exhibits an excellent cooling effect through the large surface area of a busbar body and gaps between wires even without a separate cooling member.

Those skilled in the art to which the present invention pertains will appreciate that various applications and modifications are possible within the category of the present invention based on the above description.

### (Description of Reference Numerals)

100: Busbar body
110: Wire
111: Conducting member
112: Insulative tube
200: Coupling unit, first coupling unit, second coupling unit, third coupling unit
210: Hole
220: Through-hole
300: Filler material
400: Peripheral portion

## Claims

1. A busbar assembly comprising:
a busbar body including a wire assembly constituted by a plurality of wires; and
a coupling unit coupled to the wires at each of opposite ends of the busbar body.

2. The busbar assembly according to claim 1, wherein each of the wires includes a linear conducting member covered with an insulative tube.

3. The busbar assembly according to claim 1, wherein at least one gap is defined between the wires.

4. The busbar assembly according to claim 1, wherein the coupling unit has a plurality of holes configured to receive insertion of the wires thereinto, and at least one of the wires is inserted into and coupled to each of the holes.

5. The busbar assembly according to claim 4, wherein the wires are coupled to the coupling unit by at least one of a simple fitting, a conductive adhesive, or dissolution of a filler material.

6. The busbar assembly according to claim 1, wherein a coupling means simultaneously performing electrical contact and physical fixing is added to the coupling unit.

7. The busbar assembly according to claim 6, wherein the coupling unit comprises a through-hole for fastening of a coupling member.

8. The busbar assembly according to claim 7, wherein the coupling member is at least one of a bolt and nut, a bolt, a pin, or a rivet.

9. The busbar assembly according to claim 1, wherein a first end of the busbar body is coupled to one first coupling unit, and a second end of the busbar body is coupled to one second coupling unit.

10. The busbar assembly according to claim 9, wherein the wires constituting the busbar body each have a same length.

11. The busbar assembly according to claim 1, wherein the busbar body is constituted by at least two small-unit wire assemblies, a first end of the busbar body is coupled to one first coupling unit, and a second end of the busbar body is coupled to a third coupling unit for each small-unit wire assembly.

12. The busbar assembly according to claim 11, wherein the small-unit wire assemblies have different lengths from one another.

13. A method of manufacturing the busbar assembly according to any one of claims 1 to 12, the method comprising:
preparing the coupling unit having a plurality of holes formed therein;
inserting the wires constituting the busbar body into the holes; and
coupling the wires to the coupling unit.

14. The method according to claim 13, wherein the wires are coupled to the coupling unit by dissolution of a filler material.

15. A battery module comprising the busbar assembly according to any one of claims 1 to 12.
